# EUROPEAN PATENT SPECIFICATION

(11) **EP 3 035 689 B1**
(45) Date of publication and mention of the grant of the patent: **19.05.2021**
(21) Application number: 14842075.5
(22) Date of filing: 30.05.2014
(51) Int. Cl.: H04N 21/234, H04N 21/2387, H04N 21/431, H04N 21/8549, H04N 21/2343, H04N 21/235, H04N 21/435, H04N 21/41, H04N 21/433, H04N 21/437, H04N 21/6587

(54) **TRANSMISSION APPARATUS, RELAY APPARATUS AND RECEPTION APPARATUS**
SENDEVORRICHTUNG, RELAISVORRICHTUNG UND EMPFANGSVORRICHTUNG
APPAREIL ÉMETTEUR, APPAREIL RELAIS ET APPAREIL RÉCEPTEUR

(30) Priority: 03.09.2013 JP 2013182349
(43) Date of publication of application: 22.06.2016
(73) Proprietor: Sony Corporation, Tokyo 108-0075 (JP)
(72) Inventor: MIYASHITA, Ken, Tokyo 108-0075 (JP); SATO, Naoyuki, Tokyo 108-0075 (JP); OOTSUKA, Satoshi, Tokyo 108-0075 (JP); OGAWA, Nobuhiro, Tokyo 108-0075 (JP)
(74) Representative: D Young & Co LLP
(86) International application number: PCT/JP2014/064480
(87) International publication number: WO 2015/033629

(56) References cited:
- WO-A2-2011/159140
- JP-A- 2008 109 434
- JP-A- 2010 178 147
- JP-A- 2012 015 928
- JP-A- 2012 054 800
- JP-A- 2013 048 356
- US-A1- 2007 086 519
- US-A1- 2009 297 123
- US-A1- 2011 314 174

## Description

### Technical Field

The present disclosure relates to transmission apparatuses, relay apparatuses, and reception apparatuses.

### Background Art

There has in recent years been an increasing demand for distribution of data of contents, such as video, audio, and the like, from a transmission apparatus to a reception apparatus capable of at least one of playback and editing.

For example, Patent Literature 1 discloses that a waiting time until the start of streaming playback can be reduced by previously transferring, to the user, a starting block, such as the first several tens of seconds of a video content or the like, automatically without the user's operation.

### Citation List

### Patent Literature

Patent Literature 1: JP 2006-109480A
Previously proposed arrangements are disclosed in WO 2011/159140 A2.

### Summary of Invention

### Technical Problem

However, when a video is played back in a reception apparatus, a position from which the user desires to start playback may not be the beginning of the video content. In this case, for example, the user repeatedly performs seeking to move the playback position in order to find the playback position of the reception apparatus. The user checks the video at the moved playback position to determine whether the current playback position is the desired playback position, or how far the desired playback position is located before or after the current playback position. Also, similarly, when a distributed video is edited in a reception apparatus, the user performs seeking in order to find the desired playback position.

When a plurality of playback positions are selected by seeking in this fashion (such operation is also called zapping), the playback positions to be selected are arbitrarily selected by the user. Therefore, for example, when a playback position is selected that is not included in the first several tens of seconds, a waiting time until the start of streaming playback occurs, resulting in a decrease in quick response performance, in the technique of Patent Literature 1.

With the above in mind, the present disclosure proposes a novel and improved transmission apparatus, relay apparatus, and reception apparatus that have improved quick response performance involved in content processing.

### Solution to Problem

According to the present invention there is provided a relay apparatus as defined in claim 1.

According to the present disclosure, the first encoded data is transmitted from the transmission apparatus to the reception apparatus, and thereafter, a portion of the second encoded data corresponding to the first position information is transmitted from the transmission apparatus to the reception apparatus. Therefore, while the first encoded data used for playback at the first quality is stored in the reception apparatus, only a portion of the second encoded data used for playback at the second quality, that is necessary for the user, is transmitted to the reception apparatus, wherein both the first encoded data and the second encoded data are used for playback at the second quality.

### Advantageous Effects of Invention

As described above, according to the present disclosure, provided are a novel and improved transmission apparatus, relay apparatus, and reception apparatus that have improved quick response performance involved in content processing.

Note that the effects described above are not necessarily limited, and along with or instead of the effects, any effect that is desired to be introduced in the present specification or other effects that can be expected from the present specification may be exhibited.

### Brief Description of Drawings

[FIG. 1] FIG. 1 is an illustrative diagram showing a configuration of a data transfer system according to a first embodiment of the present disclosure.
[FIG. 2] FIG. 2 is a functional block diagram showing configurations of a transmission apparatus, a relay apparatus, and a reception apparatus according to the first embodiment.
[FIG. 3] FIG. 3 is an illustrative diagram of an example of display on a display unit of a reception apparatus according to the first embodiment.
[FIG. 4] FIG. 4 is an illustrative diagram showing an operation of editing and transmitting a video to a network different from a LAN, in a data transfer system according to the first embodiment.
[FIG. 5A] FIG. 5A is a sequence diagram showing a sequence of transmission of low-frequency component data and middle-frequency component data in the first embodiment.
[FIG. 5B] FIG. 5B is a sequence diagram showing a sequence of transmission of high-frequency component data and a sequence of generation and transmission of a video to a network different from a LAN, in this embodiment.
[FIG. 6] FIG. 6 is a flowchart showing a process of fetching a middle-frequency component of a relay apparatus according to the first embodiment.
[FIG. 7] FIG. 7 is an illustrative diagram showing an operation of editing a video, and transmitting middle-resolution data to a network different from a LAN, in a data transfer system according to a second embodiment of the present disclosure.
[FIG. 8A] FIG. 8A is a sequence diagram showing a sequence of transmission of low-resolution data and middle-resolution data, in the second embodiment.
[FIG. 8B] FIG. 8B is a sequence diagram showing a sequence of generation and transmission of a middle-resolution video to a network different from a LAN, in the second embodiment.
[FIG. 9] FIG. 9 is a flowchart showing a data relaying operation of a relay apparatus according to the second embodiment.
[FIG. 10] FIG. 10 is an illustrative diagram showing an operation of editing a video, and transmitting high-resolution data to a network different from a LAN, in a data transfer system according to the second embodiment.
[FIG. 11A] FIG. 11A is a sequence diagram showing a sequence of transmission of low-resolution data and middle-resolution data, in the second embodiment.
[FIG. 11B] FIG. 11B is a sequence diagram showing a sequence of transmission of high-resolution data, and a sequence of generation and transmission of a high-resolution video to a network different from a LAN, in the second embodiment.
[FIG. 12] FIG. 12 is an illustrative diagram showing a data transfer system according to a third embodiment of the present disclosure.
[FIG. 13] FIG. 13 is a functional block diagram showing configurations of a transmission apparatus, a relay apparatus, and a reception apparatus according to the third embodiment.
[FIG. 14] FIG. 14 is a block diagram for describing a hardware configuration of a transmission apparatus according to an embodiment of the present disclosure.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Note that description will be described in the following order.
1. First embodiment (example where data is in SVC format)
   1-1. Overview of data transfer system
   1-2. Example of operation of editing and transmitting data to network different from LAN
2. Second embodiment (example where data is in compressed format)
   2-1. Overview of data transfer system
   2-2. Example of operation of editing and transmitting middle-resolution data to network different from LAN
   2-3. Example of operation of editing and transmitting high-resolution data to network different from LAN
3. Third embodiment (other data transfer systems)
4. Hardware configuration
5. Conclusion

### <1. First embodiment (example where data is in SVC format)>

### [1-1. Overview of data transfer system]

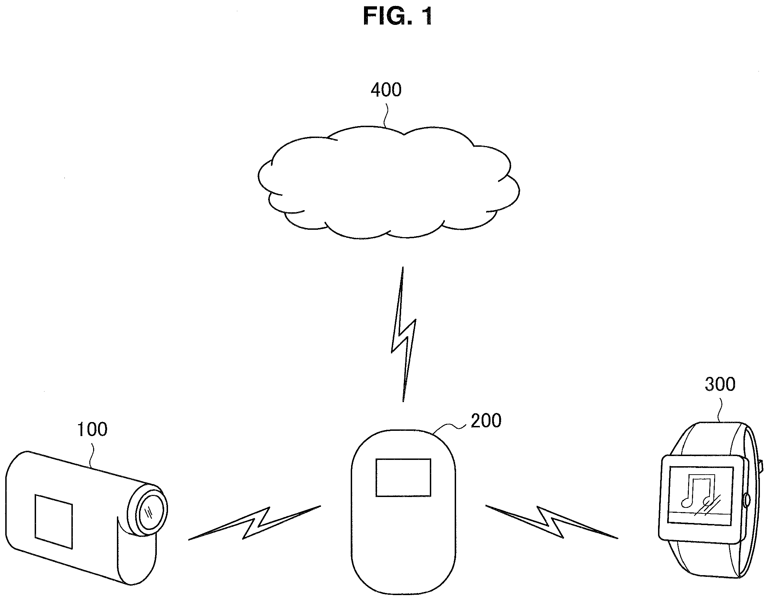

Firstly, a schematic configuration of a data transfer system according to a first embodiment of the present disclosure will be described with reference to FIG. 1 to FIG. 3.

FIG. 1 is an illustrative diagram showing a configuration of a data transfer system according to the first embodiment of the present disclosure. The data transfer system shown in FIG. 1 includes a transmission apparatus 100, a relay apparatus 200, and a reception apparatus 300.

In the example shown in FIG. 1, the transmission apparatus 100 and the reception apparatus 300 transmit and receive data to and from each other via the relay apparatus 200. The transmission apparatus 100, the relay apparatus 200, and the reception apparatus 300 transmit and receive data to and from each other by, for example, connecting to a local area network (LAN) employing wireless communication. The relay apparatus 200 can be connected to a network 400 that is different from the LAN to which the transmission apparatus 100 and the reception apparatus 300 are connected, and transmits and receives data to and from another data storage apparatus that is connected to the different network 400.

In the data transfer system according to this embodiment, data of a content such as a temporally continuous video or audio or the like, that is stored in the transmission apparatus 100, is transmitted to the reception apparatus 300 via the relay apparatus 200. The transmitted data is edited in the reception apparatus 300, and transmitted via the relay apparatus 200 to another data storage apparatus that is connected to the network 400 different from the LAN.

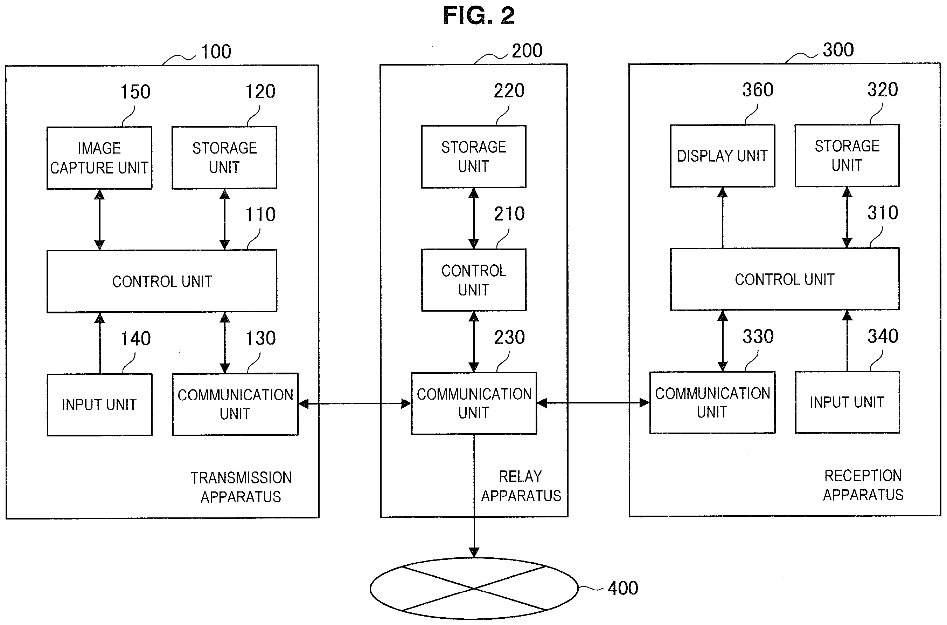

FIG. 2 is a functional block diagram showing configurations of the transmission apparatus 100, the relay apparatus 200, and the reception apparatus 300 according to this embodiment.

### (Transmission apparatus 100)

The transmission apparatus 100 is, for example, an image capture device that captures a video, such as a digital video camera or the like. In the example of FIG. 2, the transmission apparatus 100 includes, for example, a control unit 110, a storage unit 120, a communication unit 130, an input unit 140, and an image capture unit 150.

The control unit 110 controls each component included in the transmission apparatus 100. For example, as shown in FIG. 2, the control unit 110 outputs, to each component, a control signal corresponding to an operation signal output from the input unit 140, to perform an image capture control, image processing control, recording control, and the like. The control unit 110 also functions as a communication control unit that controls the communication unit 130.

The storage unit 120 is a storage medium, such as a memory card, hard disk drive (HDD), solid state drive (SSD), or the like. The storage unit 120 stores data encoded in a predetermined format that is transmitted from the control unit 110, and data transmitted by an external apparatus, such as the relay apparatus 200 or the like. These pieces of data will be described below.

The communication unit 130 is an interface that wirelessly communicates with an external apparatus therearound, such as the relay apparatus 200 or the like, under the control of the control unit 110. For example, the communication unit 130 connects to a Wi-Fi wireless LAN that employs the relay apparatus 200 as an access point, to wirelessly transmit and receive data to and from the reception apparatus 300, which is connected to the same LAN via the relay apparatus 200, and the relay apparatus 200.

The input unit 140 detects the user's operational input, and outputs an operation signal indicating the operational input to the control unit 110. The input unit 140 may, for example, be a physically configured button, such as an image capture button for inputting the start and end of image capture, or the like, or a touch screen for detecting a touch operation on an operation screen.

The image capture unit 150 includes, for example, an optical system, such as a lens or the like, and a signal conversion unit including an image sensor, such as a charge coupled device (CDD), complementary metal oxide semiconductor (CMOS), or the like. The image capture unit 150 converts an image of a subject formed by the optical system into an electrical image signal using the signal conversion unit, under the control of the control unit 110. The image signal is encoded in a predetermined format by the control unit 110, and transmitted to the storage unit 120.

### (Relay apparatus 200)

The relay apparatus 200 is, for example, a mobile Wi-Fi router, a smartphone having a tethering function, or the like. The relay apparatus 200 includes, for example, a control unit 210, a storage unit 220, and a communication unit 230.

The control unit 210 controls each component included in the relay apparatus 200. For example, the control unit 210 performs a recording control, image processing control, and the like. The control unit 210 also functions as a communication control unit that controls the communication unit 230.

The storage unit 220 is a storage medium, such as a memory card, HDD, SSD, or the like. The storage unit 220 stores, for example, encoded data transmitted from the transmission apparatus 100 to the communication unit 230, and data transmitted from the reception apparatus 300 to the communication unit 230, under the control of the control unit 210.

The communication unit 230 is an interface that wirelessly communicates with, for example, the transmission apparatus 100 and the reception apparatus 300 under the control of the control unit 210. For example, the communication unit 230 serves as an access point to form a Wi-Fi wireless LAN to which the transmission apparatus 100 and the reception apparatus 300 are connected. The communication unit 230 can also connect to the network 400 different from the LAN to which the transmission apparatus 100 and the reception apparatus 300 are connected, and can perform data communication with a data storage apparatus connected to the different network. Moreover, the communication unit 230 can function as a gateway to perform data communication with the Internet or the like, which is different from the LAN.

### (Reception apparatus 300)

The reception apparatus 300 is an information processing apparatus, such as a wearable device, tablet terminal, or the like. The reception apparatus 300 includes, for example, a control unit 310, a storage unit 320, a communication unit 330, an input unit 340, and a display unit 360.

The control unit 310 controls each component included in the reception apparatus 300. For example, as shown in FIG. 2, the control unit 310 outputs, to each component, a control signal corresponding to an operation signal output from the input unit 340, to perform an image processing control, recording control, data generation control, and the like. The control unit 310 also performs a recording control or the like in response to transmission of data from an apparatus connected to the same LAN. Moreover, the control unit 310 also functions as a communication control unit that controls the communication unit 330.

The storage unit 320 is a storage medium, such as a memory card, HDD, SSD, or the like. The storage unit 320 stores data that is transmitted from the transmission apparatus 100 via the relay apparatus 200. The storage unit 320 also stores data that is generated by the control unit 310.

The communication unit 330 is an interface that wirelessly communicates with, for example, the transmission apparatus 100 and the relay apparatus 200 under the control of the control unit 310. For example, the communication unit 330 connects to a Wi-Fi wireless LAN employing the relay apparatus 200 as an access point, and thereby transmits and receives data to and from the transmission apparatus 100 connected to the same LAN via the relay apparatus 200, and the relay apparatus 200.

The input unit 340 detects the user's operational input, and outputs an operation signal indicating the operational input to the control unit 310. The input unit 340 may be a physically configured button, such as an image capture button for inputting, for example, a selection operation or a movement operation, or the like, or may be a touch screen for detecting a touch operation to the display unit 360 described below.

The display unit 360 is a display apparatus, such as a liquid crystal display (LCD), organic electroluminescence (EL) display, or the like. The display unit 360 displays and presents, for example, a content, such as a video or the like, that is stored in the storage unit 320, to the user under the control of the control unit 310.

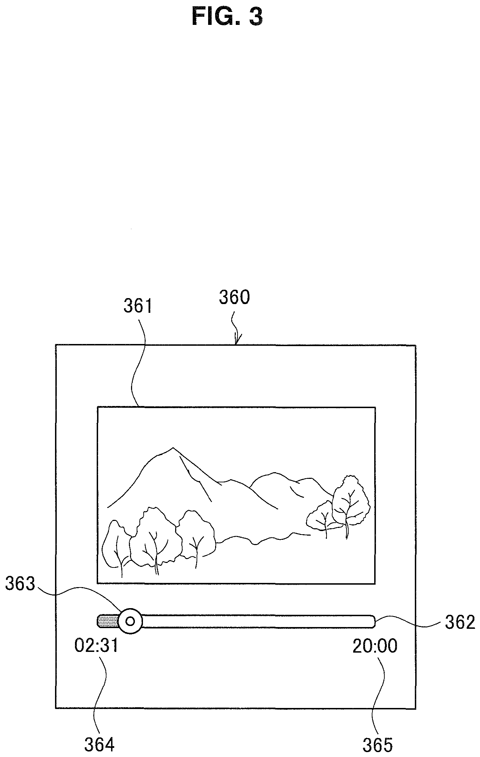

FIG. 3 is an illustrative diagram of an example of display on the display unit 360 of the reception apparatus 300 according to this embodiment. In the example of FIG. 3, the display unit 360 includes a touch screen, and functions as the input unit 340 that senses the user's touch operation.

The display unit 360 displays, for example, a content display region 361, a seek bar 362, a playback position 363, a playback time 364, and a total playback time 365.

In the content display region 361, for example, a video stored in the storage unit 320 is displayed. The seek bar 362 indicates a relative position of the playback position 363 with respect to the total playback time 365. The playback position 363, which is displayed on the seek bar 362, indicates a relative playback position of a video that is being played back in the content display region 361. The playback time 364 indicates a playback time at the playback position 363. The total playback time 365 indicates the total playback time of a video displayed in the content display region 361.

For example, a video at any playback position can be displayed in the content display region 361 by the user performing a touch operation and thereby moving the playback position 363 to any position on the seek bar 362. In the foregoing, a schematic configuration of the data transfer system according to the first embodiment of the present disclosure has been described.

### [1-2. Example of operation of editing and transmitting data to network different from LAN]

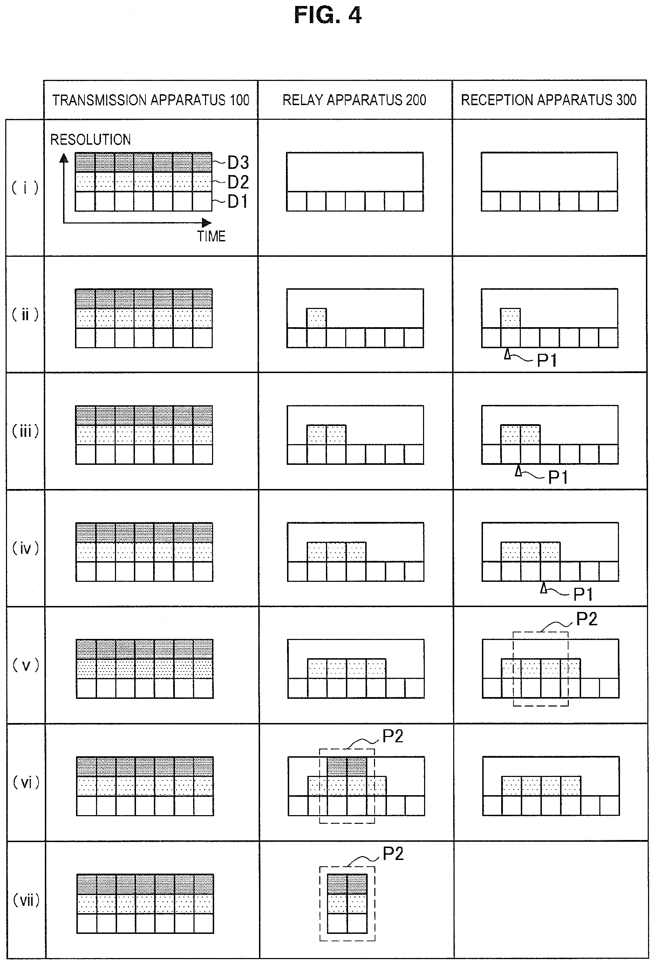

Next, an example of an operation of editing and transmitting a video to the network 400 different from the LAN, in the data transfer system according to this embodiment, will be described with reference to FIGS. 4-6. In the editing technique of this embodiment, a video having any playback time range desired by the user is extracted from a video of high resolution quality stored in the transmission apparatus 100 (such processing is also called trimming). The trimmed video is transmitted to a data storage apparatus connected to the network 400 different from the LAN.

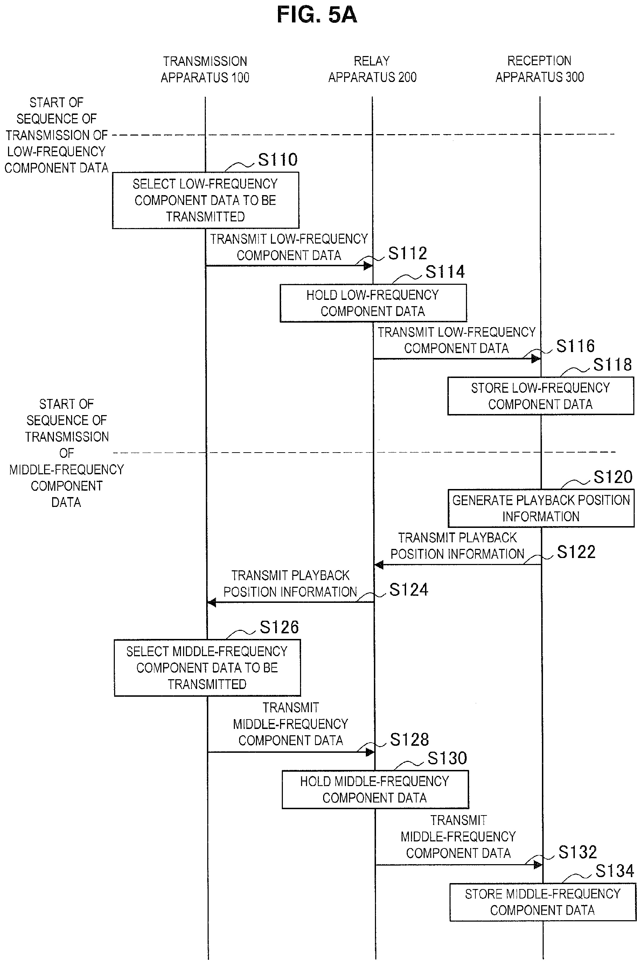

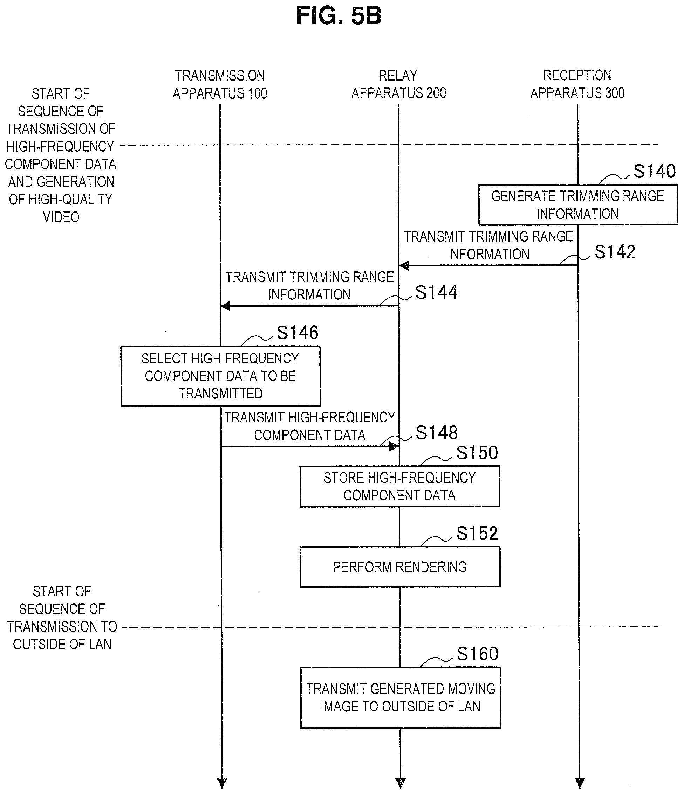

FIG. 4 is an illustrative diagram showing an operation of editing and transmitting a video to the network 400 different from the LAN, in the data transfer system according to this embodiment. FIG. 5A is a sequence diagram showing a sequence of transmission of low-frequency component data D1 and middle-frequency component data D2 in this embodiment. FIG. 5B is a sequence diagram showing a sequence of transmission of high-frequency component data D3 and a sequence of generation and transmission of a video to a network different from a LAN, in this embodiment.

A video in this embodiment is, for example, data of a video captured by the transmission apparatus 100. A video captured by the transmission apparatus 100 is encoded by the control unit 110 in the scalable video coding (SVC) format, and stored in the storage unit 120. The SVC format is a video encoding format that has a multilayer data structure, and allows for playback at a plurality of qualities by using a combination of layers.

In this embodiment, as shown in FIG. 4, data encoded in the SVC format has layers including three pieces of encoded data, i.e., the low-frequency component data D1, the middle-frequency component data D2, and the high-frequency component data D3. Data encoded in the SVC format can be played back at three qualities, i.e., low resolution, middle resolution, and high resolution. In this case, for playback at low resolution quality, the low-frequency component data D1 is used. Also, for playback at middle resolution quality, two pieces of encoded data, i.e., the low-frequency component data D1 and the middle-frequency component data D2, are used. Moreover, for playback at high resolution quality, three pieces of encoded data, i.e., the low-frequency component data D1, the middle-frequency component data D2, and the high-frequency component data D3, are used.

In other words, data for playback at high resolution is obtained by additionally providing, as a difference, component data having a higher frequency than that of the low-frequency component data D1 in addition to the low-frequency component data D1.

### (Sequence of transmission of low-frequency component data)

Firstly, a sequence of transmission of the low-frequency component data D1 will be described. When encoded data of one or a plurality of contents is stored in the storage unit 120 of the transmission apparatus 100, the control unit 110 selects encoded data that is to be transmitted to the reception apparatus 300. In this case, the control unit 110 determines, for example, whether data is in the SVC format, and selects encoded data that is in the SVC format (S110).

Next, the communication unit 130 transmits the low-frequency component data D1 of the selected encoded data in the SVC format to the relay apparatus 200 under the control of the control unit 110 (S112).

Moreover, the control unit 210 of the relay apparatus 200 causes the storage unit 220 to hold the transmitted low-frequency component data D1 (S114). After step S114, the communication unit 230 transmits the transmitted low-frequency component data D1 to the reception apparatus 300 under the control of the control unit 210 (S116). Holding data in this embodiment means that data is stored in the storage unit 220 so that the data can be processed after relaying, but not that data is temporarily stored for relaying.

Thereafter, the control unit 310 of the reception apparatus 300 causes the storage unit 320 to store the transmitted low-frequency component data D1 (S118). A state (i) shown in FIG. 4 is a state in which the process of step S118 has been performed, i.e., a state in which the low-frequency component data D1 transmitted from the transmission apparatus 100 is stored in the relay apparatus 200 and the reception apparatus 300.

In the state (i), for example, the reception apparatus 300 can play back a content at low resolution quality using the transmitted low-frequency component data D1. As a result, the user can check a video of low resolution quality and thereby roughly grasp the video. In this case, the low-frequency component data D1 is previously stored in the reception apparatus 300 and is displayed without an influence of the communication environment, resulting in an improvement in quick response performance.

Also, when the reception apparatus 300 described below performs streaming playback at middle resolution quality, a video or image at a playback position selected by the user can be displayed at low resolution quality before the start of streaming playback. As a result, the user is allowed to know what video is to be displayed and thereby easily find a desired video before the start of streaming playback.

A sequence of transmission of the low-frequency component data D1 may be automatically started by the control unit 110, or may be started according to the user's operation. When the sequence is automatically started, the control unit 110 may select encoded data in the SVC format that has yet to be transmitted, from encoded data stored in the storage unit 120, at predetermined time intervals, for example. Alternatively, the control unit 110 may select encoded data in the SVC format that has yet to be transmitted, from encoded data stored in the storage unit 120, at a timing when new encoded data is stored in the storage unit 120.

### (Sequence of transmission of middle-frequency component data)

Next, a sequence of transmission of the middle-frequency component data D2 will be described. A sequence of transmission of the middle-frequency component data D2 is, for example, started after step S118 by the user operating the reception apparatus 300 and thereby selecting a playback position on the basis of the low-frequency component data D1. When the sequence of transmission of the middle-frequency component data D2 is started, the control unit 310 of the reception apparatus 300 generates playback position information that is first position information indicating the selected playback position (S120). The playback position information contains, for example, a playback time indicating the selected playback position.

Moreover, the communication unit 330 transmits the generated playback position information to the relay apparatus 200 under the control of the control unit 310 (S122). After step S122, the communication unit 230 of the relay apparatus 200 transmits the received playback position information to the transmission apparatus 100 under the control of the control unit 210 (S124).

Thereafter, the control unit 110 of the transmission apparatus 100 selects at least a portion of the middle-frequency component data D2 corresponding to the received playback position information (S126). After step S126, the communication unit 130 transmits the selected middle-frequency component data D2 to the relay apparatus 200 under the control of the control unit 110 (S128).

Next, the control unit 210 of the relay apparatus 200 causes the storage unit 220 to hold the received middle-frequency component data D2 (S130). After step S130, the communication unit 230 transmits the received middle-frequency component data D2 to the reception apparatus 300 under the control of the control unit 210 (S132).

Moreover, the control unit 310 of the reception apparatus 300 causes the storage unit 320 to store the received middle-frequency component data D2 (S134). A state (ii) shown in FIG. 4 shows a state in which the process of step S134 has been performed, i.e., a state in which the selected middle-frequency component data D2 is stored in the relay apparatus 200 and the reception apparatus 300.

After the start of a sequence of transmission of middle-frequency component data, the reception apparatus 300 plays back a content at middle resolution quality using the received middle-frequency component data D2 and the previously stored low-frequency component data D1. In this case, the control unit 310 changes a playback position PI, depending on the frame rate. For example, when the frame rate is 30 frames/sec, the control unit 310 advances the playback position by 33 msec. After the playback position P1 has been changed, playback position information corresponding to the playback position PI changed by the control unit 310 is generated, and the processes of S120 to S134 are repeated.

Note that, in this embodiment, in step S126, as the middle-frequency component data D2 corresponding to the playback position information, a portion of the middle-frequency component data D2 containing the playback position PI, and in addition, another portion of the middle-frequency component data D2 corresponding a playback position subsequent to the playback position PI, may be selected. In this case, for example, the control unit 110 may transmit a portion of the middle-frequency component data D2 containing the playback position PI earlier, and thereafter, transmit another portion of the middle-frequency component data D2 corresponding a playback position subsequent to the playback position PI. In this case, how much the subsequent playback position to be selected is later than the playback position PI may be automatically set, depending on the communication environment, or may be arbitrarily set by the user.

A state (iii) shown in FIG. 4 is a state in which a portion of the middle-frequency component data D2 containing the playback position PI, and another portion of the middle-frequency component data D2 corresponding to a playback position subsequent to the playback position PI, are stored in the relay apparatus 200 and the reception apparatus 300. In the reception apparatus 300, such a process performed during playback of a content allows for streaming playback at middle resolution quality.

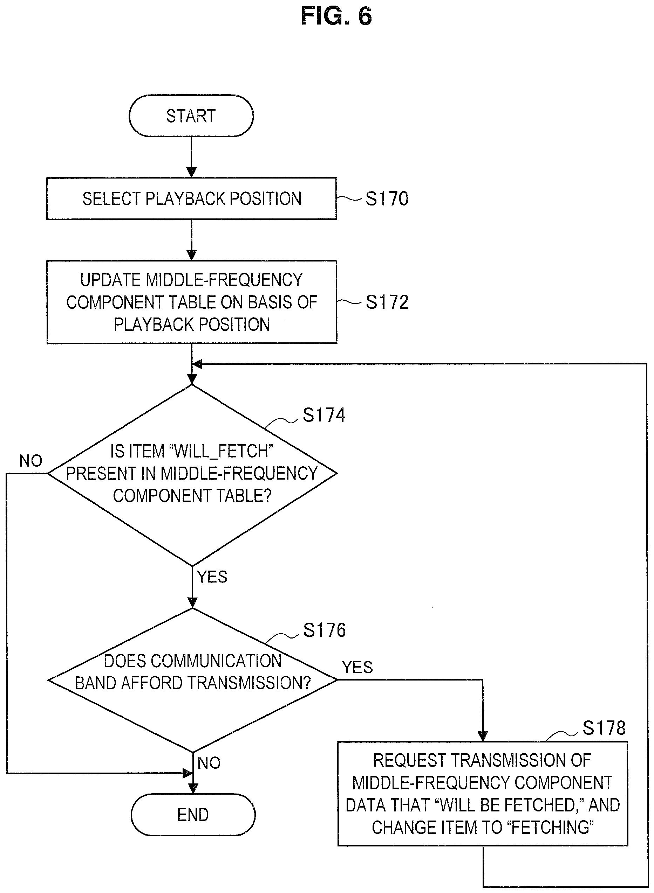

A process of fetching the middle-frequency component data D2 will be described in detail with reference to FIG. 6. FIG. 6 is a flowchart showing a process of fetching a middle-frequency component of the relay apparatus 200 according to this embodiment.

Initially, when a sequence of transmission of the middle-frequency component data D2 is started, the control unit 310 of the reception apparatus 300 selects the playback position PI (S170). Next, the control unit 310 updates a middle-frequency component data table of the storage unit 320 that stores middle-frequency component data, on the basis of the playback position PI (S172). The middle-frequency component data table is a set of the middle-frequency component data D2, in a data table of the reception apparatus 300 of FIG. 4. An algorithm that is used for updating by the control unit 310 depends on the application. A simplest algorithm is shown in Table 1.

**[Table 1]**

| | |
|---|---|
| 1 | typedef State = enum {NONE, WILL_FETCH, FETCHING, FILLED}; |
| 2 | State state = table[currentTime]; |
| 3 | if (state == NONE){table[currentTime] = WILL_FETCH; |
| 4 | State nextState = table[currentTime + TABLE_SLOT_DURATION]; |
| 5 | if(nextState == NONE){table[currentTime + TABLE_SLOT_DURATION] = WILL_FETCH; |

Referring to the first line of Table 1, each element of the table has the following four states.
NONE: the middle-frequency component data D2 is not present, and will not be fetched.
WILL_FETCH: the middle-frequency component data D2 is not present, and will be fetched.
FETCHING: the middle-frequency component data D2 is not present, and is being fetched.
FILLED: middle-frequency component data is present.

Also, referring to the second and third lines of Table 1, when an element corresponding to a playback position is NONE, WILL_FETCH takes place, and an attempt is made to fetch the middle-frequency component data D2. Moreover, referring to the fourth and fifth lines of Table 1, an element next to the element corresponding to the playback position is NONE, WILL_FETCH takes place, and an attempt is made to fetch the middle-frequency component data D2.

After step S172 of FIG. 6, the control unit 310 determines whether the middle-frequency component data table contains the item "WILL_FETCH" (S174).

If the result of determination in step S174 shows that there is not the item "WILL_FETCH," the control unit 310 ends the operation of fetching the middle-frequency component data D2.

Alternatively, if the result of determination in step S174 shows that there is the item "WILL_EARN," the control unit 310 determines whether the communication band affords transmission of the middle-frequency component data D2 (S176).

If the result of determination in step S176 shows that the communication band does not afford, the control unit 310 ends the operation of fetching a middle-frequency component.

Alternatively, if the result of determination in step S176 shows that the communication band affords, the control unit 310 generates playback position information including the middle-frequency component data D2 that "will be fetched," and transmits the playback position information to the relay apparatus 200. Moreover, the control unit 310 updates the item "WILL_FETCH" with "FETCHING" (S178). As a result, the middle-frequency component data D2 that "will be fetched" is transmitted from the transmission apparatus 100 to the reception apparatus 300 via the relay apparatus 200.

Note that the process shown in FIG. 6 is also performed when a playback position is automatically changed, such as during playback of a video, or the like, or when a playback position is changed by the user's operation. A state (iv) of FIG. 4 shows a state in which, after the state (iii), the playback position PI has been moved to a subsequent playback position by the user's operation. After the playback position has been moved, the processes of steps S120-S134 are performed, so that the middle-frequency component data D2 corresponding to the moved playback position PI is stored in the storage unit 320.

Moreover, in this case, at step S126, for example, as the middle-frequency component data D2 corresponding to the playback position information, a portion of the middle-frequency component data D2 containing the playback position PI, and in addition, another portion of the middle-frequency component data D2 corresponding to a playback position subsequent to the playback position PI, may be selected. In this case, for example, the control unit 110 may transmit a portion of the middle-frequency component data D2 containing the playback position PI earlier, and thereafter, transmit another portion of the middle-frequency component data D2 corresponding to a playback position subsequent to the playback position PI. Because the middle-frequency component data D2 corresponding to a playback position subsequent to the playback position PI is transmitted, the corresponding middle-frequency component data D2 is stored in the relay apparatus 200 and the reception apparatus 300 as shown in a state (v) of FIG. 4.

### (Sequence of high-frequency component data transmission and high-quality video generation)

Next, a sequence of high-frequency component data transmission and high-quality video generation will be described. The sequence of high-frequency component data transmission and high-quality video generation is started after step S134 by the user operating the reception apparatus 300 and thereby selecting a trimming range, for example.

Initially, the control unit 310 generates trimming range information according to the user's operation of selecting any playback position range (S140). The trimming range information contains, for example, position information indicating a playback position where trimming is started, and position information indicating a playback position where trimming is ended. The user's selection operation is, for example, an operation of selecting the start position and end position of trimming on the seek bar 362 shown in FIG. 3, and is detected by the input unit 340. A state (v) of FIG. 4 indicates a state in which a playback position range P2 has been selected according to the user's selection operation.

Next, the communication unit 330 transmits the trimming range information to the relay apparatus 200 under the control of the control unit 310 (S142). After S142, the communication unit 230 of the relay apparatus 200 transmits the received trimming range information to the transmission apparatus 100 under the control of the control unit 210 (S144).

Moreover, the control unit 110 of the transmission apparatus 100 selects at least a portion of the high-frequency component data D3 corresponding to the received trimming range information (S146). In this case, the control unit 110 selects, for example, a portion of the high-frequency component data D3 corresponding to the playback position range indicated by the trimming range information.

Thereafter, the communication unit 130 transmits the selected high-frequency component data D3 to the relay apparatus 200 under the control of the control unit 110 (S148).

Next, the control unit 210 of the relay apparatus 200 causes the storage unit 220 to store the received high-frequency component data D3 (S150). A state (vi) of FIG. 4 is a state in which, after step S150, the high-frequency component data D3 corresponding to the playback position range P2 indicated by the trimming range information is stored in the storage unit 220.

Moreover, the control unit 210 generates (also referred to as "renders") a video of high resolution quality within the range corresponding to the trimming range information using the low-frequency component data D1, the middle-frequency component data D2, and the high-frequency component data D3 that are stored in the storage unit 220 (S152). A state (vii) of FIG. 4 indicates a state in which, after step S152, a video of high resolution quality within a range corresponding to the playback position range P2 indicated by the trimming range information has been generated.

### (Sequence of transmission to network different from LAN)

Next, a sequence of transmission of a video rendered by the relay apparatus 200 to the network 400 different from the LAN will be described. The sequence of transmission of the rendered video to the network 400 different from the LAN may, for example, be started after step S152 by the user operating the reception apparatus and thereby selecting a transmission operation. Alternatively, the sequence of transmission of the rendered video to the network 400 different from the LAN may, for example, be started after step S152 automatically under the control of the control unit 210. In this embodiment, the rendered video is transmitted to a data storage apparatus of a server, an information processing apparatus, or the like connected to the network 400 different from the LAN, for example.

### (Relay operation of relay apparatus 200)

Note that, in this embodiment, the control unit 210 of the relay apparatus 200 may determine whether encoded data, such as the low-frequency component data D1, the middle-frequency component data D2, or the like, that is transmitted from a transmission apparatus is to be held in the storage unit 220 when the encoded data is relayed, on the basis to the format of the encoded data.

For example, the control unit 210, after receiving encoded data to be relayed, determines whether the received encoded data is in the SVC format. If the result of determination indicates that the received encoded data is in the SVC format, the control unit 210 causes the storage unit 220 to hold the received encoded data, and relays the encoded data. Meanwhile, if the received encoded data is not in the SVC format, the control unit 210 only relays the received encoded data without causing the storage unit 220 to hold the encoded data. Moreover, if the received encoded data is not in the SVC format, determination may be further performed on the basis of another format described below, and the encoded data may be held, for example.

In the foregoing, an example of the operation of editing and transmitting a video to the network 400 different from the LAN, in the data transfer system according to this embodiment, has been described. In the data transfer system according to this embodiment, for a video stored in the SVC format, the low-frequency component data D1 is previously transmitted from the transmission apparatus 100, and stored in the relay apparatus 200 and the reception apparatus 300. As a result, the user can check a video of low resolution quality and thereby roughly grasp the video. In this case, the low-frequency component data D1 is previously stored in the reception apparatus 300 and is displayed without an influence of the communication environment, resulting in an improvement in quick response performance.

In addition, in the data transfer system according to this embodiment, the middle-frequency component data D2 corresponding to the playback position information is transmitted from the transmission apparatus 100 to the reception apparatus 300, and is stored in the relay apparatus 200 and the reception apparatus 300. In this case, only a portion of the middle-frequency component data D2 corresponding to any position selected by the user is transmitted, and therefore, compared to a case where all the middle-frequency component data D2 is transmitted, the total amount of transferred data can be reduced. As a result, the power consumption of the entire system can be reduced.

Moreover, in the data transfer system according to this embodiment, the user seeks a desired playback position or range while streaming playback of a video is being performed at middle resolution quality. In this case, in the data transfer system according to this embodiment, compared to a case where seeking is performed while streaming playback of a video is being performed at high resolution quality, the total amount of transferred data can be reduced, resulting in an improvement in quick response performance.

Moreover, in the data transfer system according to this embodiment, the relay apparatus 200 holds encoded data of the low-frequency component data D1 or the middle-frequency component data D2 that is relayed. For example, in this embodiment, if transfer from the relay apparatus 200 to the reception apparatus 300 has failed, then when an attempt is made to transfer encoded data to the reception apparatus 300 again, a process of transmitting the encoded data stored in the relay apparatus 200 to the reception apparatus 300 is performed. Therefore, in the data transfer system according to this embodiment, even in such a case, the transfer of data from the transmission apparatus 100 to the reception apparatus 300 does not take place, and therefore, the total amount of transferred data can be reduced, so that the power consumption of the entire system can be reduced.

Moreover, in the data transfer system according to this embodiment, the high-frequency component data D3 corresponding to the trimming range information is transmitted from the transmission apparatus 100 to the relay apparatus 200, in which a video of high resolution quality corresponding to the trimming range information is rendered. In this case, the high-frequency component data D3 is not transmitted to the reception apparatus 300, and only a portion of the high-frequency component data D3 that is necessary for rendering is transmitted to the relay apparatus 200, and therefore, the total amount of transferred data is reduced. As a result, in the data transfer system according to this embodiment, the power consumption of the entire system can be reduced.

Moreover, in the data transfer system according to this embodiment, rendering is performed using the low-frequency component data D1, the middle-frequency component data D2, and the high-frequency component data D3 that are stored in the relay apparatus 200, and a rendered video is transmitted to the network 400 different from the LAN. Therefore, compared to a case where each encoded data is not stored in the relay apparatus 200, the amount of transferred data between the transmission apparatus 100 or the reception apparatus 300 and the relay apparatus 200 can be reduced when a rendered video is transmitted to the network 400 different from the LAN. As a result, in the data transfer system according to this embodiment, the power consumption of the entire system can be reduced.

### <2. Second embodiment (data is in compressed format)>

### [2-1. Overview of data transfer system]

Next, a data transfer system according to a second embodiment of the present disclosure will be described. This embodiment is an example process of editing and transmitting a video stored in a transmission apparatus 100 at predetermined resolution quality to a network 400 that is different from a LAN.

This embodiment is different from the first embodiment in that encoded data of a video is stored in a compressed format in the transmission apparatus 100. The encoded data stored in the transmission apparatus 100 is compressed in the spatial direction, for example. The storage unit 120 stores a plurality of pieces of encoded data indicating the same content that are compressed at different compression ratios. Also, this embodiment is different from the first embodiment in that a video is transmitted at predetermined resolution quality to the network 400 different from the LAN. Note that the data transfer system, the transmission apparatus 100, the relay apparatus 200, and the reception apparatus 300 according to this embodiment are assumed to have configurations similar to those of the first embodiment.

### [2-2. Example of operation of editing and transmitting middle-resolution data to network different from LAN]

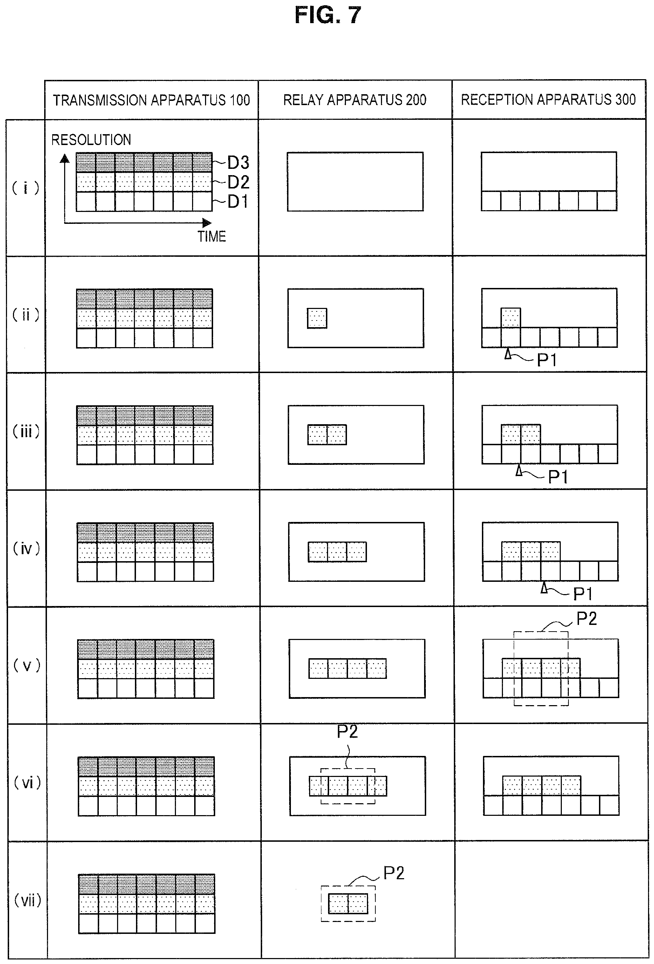

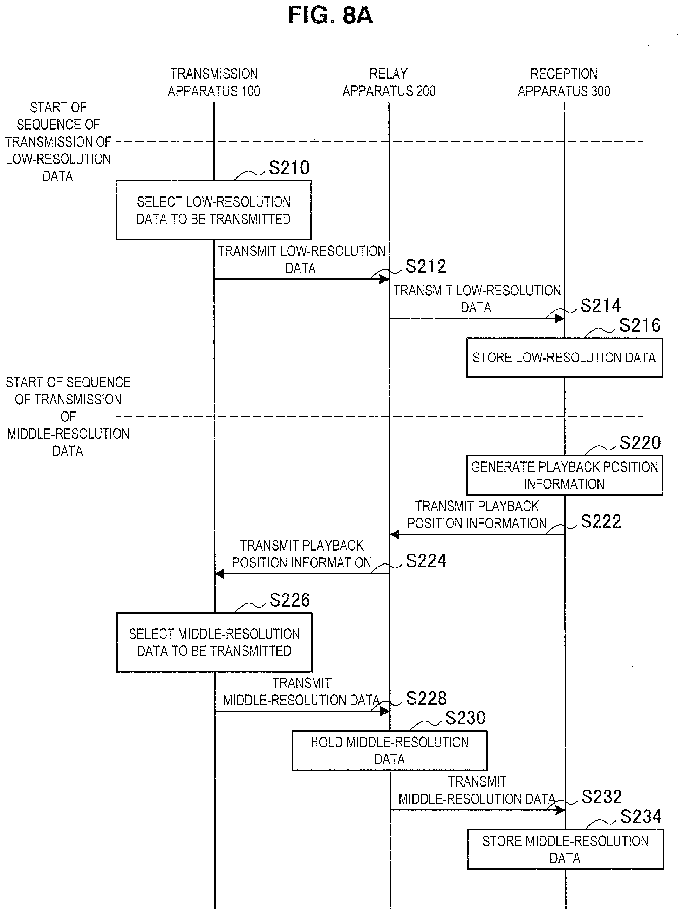

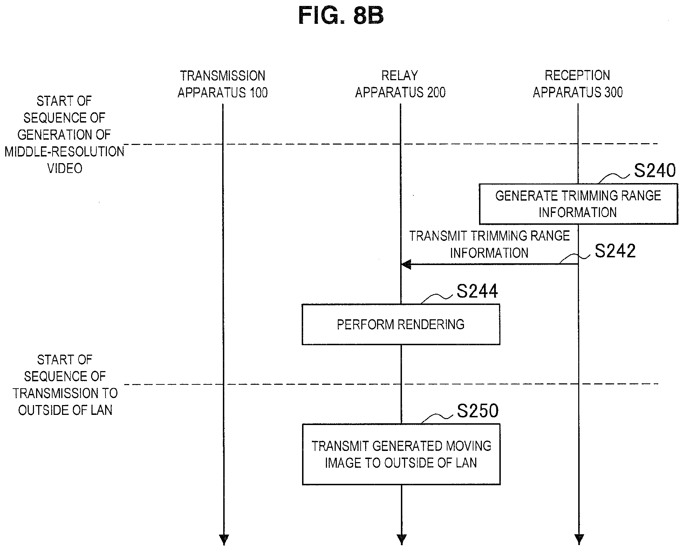

An example of an operation of generating a video of middle resolution quality, and transmitting the generated video to the network 400 different from the LAN, will be described with reference to FIGS. 7-9. FIG. 7 is an illustrative diagram showing an operation of editing a video, and transmitting middle-resolution data to the network 400 different from the LAN, in the data transfer system according to the second embodiment of the present disclosure. FIG. 8A is a sequence diagram showing a sequence of transmission of low-resolution data D1 and middle-resolution data D2 in this embodiment. FIG. 8B is a sequence diagram showing a sequence of generation and transmission of a middle-resolution video to a network different from a LAN, in this embodiment.

As shown in FIG. 7, in this embodiment, the storage unit 120 of the transmission apparatus 100 stores three pieces of encoded data, i.e., low-resolution data D1, middle-resolution data D2, and high-resolution data D3 that indicate the same content. The three pieces of encoded data have differnt compression ratios. The low-resolution data D1 has the highest compression ratio, and the high-resolution data D3 has the lowest compression ratio. Therefore, of the amounts of the three pieces of encoded data, the low-resolution data D1 has the smallest amount, and the high-resolution data D3 has the greatest amount. Also, the three pieces of encoded data are used separately, i.e., the low-resolution data D1 is used for playback at low resolution quality, the middle-resolution data D2 is used for playback at middle resolution quality, and the high-resolution data D3 is used for playback at high resolution quality.

### (Sequence of transmission of low-resolution data)

Firstly, a sequence of transmission of the low-resolution data D1 will be described. When encoded data of one or a plurality of contents is stored in the storage unit 120 of the transmission apparatus 100, the control unit 110 selects data that is to be transmitted to the reception apparatus 300. In this case, for example, the control unit 110 determines whether pieces of encoded data indicating the same content are in compressed formats using a plurality of compression ratios, to select encoded data in compressed formats using three compression ratios, i.e., low resolution, middle resolution, and high resolution (S210).

Next, the communication unit 130 transmits the selected low-resolution data D1 to the relay apparatus 200 under the control of the control unit 110 (S212). After step S212, the communication unit 230 transmits the transmitted low-resolution data D1 to the reception apparatus 300 under the control of the control unit 210 (S214).

Moreover, the control unit 310 of the reception apparatus 300 causes the storage unit 320 to store the transmitted low-resolution data D1 (S216). A state (i) shown in FIG. 7 indicates a state in which the process of step S118 has been performed, i.e., a state in which the low-resolution data D1 transmitted from the transmission apparatus 100 is stored in the reception apparatus 300. In the state (i), for example, the reception apparatus 300 can play back a content at low resolution quality using the transmitted low-resolution data D1.

The sequence of transmission of the low-resolution data D1 may be started automatically by the control unit 110 or according to the user's operation, as with the sequence of transmission of the low-frequency component data D1 in the first embodiment.

### (Sequence of transmission of middle-resolution data)

Next, a sequence of transmission of the middle-resolution data D2 will be described. The sequence of transmission of the middle-resolution data D2 is, for example, started after step S216 by the user operating the reception apparatus 300 and thereby selecting a playback position on the basis of the low resolution D1. Initially, when the sequence of transmission of the middle-resolution data D2 is started, the control unit 310 of the reception apparatus 300 generates playback position information that is first position information indicating the selected playback position (S220). The playback position information contains, for example, the playback time of the selected playback position.

Next, the communication unit 330 transmits the generated playback position information to the relay apparatus 200 under the control of the control unit 310 (S222). After step S222, the communication unit 230 of the relay apparatus 200 transmits the received playback position information to the transmission apparatus 100 under the control of the control unit 210 (S224).

Moreover, the control unit 110 of the transmission apparatus 100 selects at least a portion of the middle-resolution data D2 corresponding to the received playback position information (S226). After step S126, the communication unit 130 transmits the selected middle-resolution data D2 to the relay apparatus 200 under the control of the control unit 110 (S228).

Thereafter, the control unit 210 of the relay apparatus 200 causes the storage unit 220 to hold the received middle-resolution data D2 (S230). After step S230, the communication unit 230 transmits the received middle-resolution data D2 to the reception apparatus 300 under the control of the control unit 210 (S232).

Next, the control unit 310 of the reception apparatus 300 causes the storage unit 320 to store the received middle-resolution data D2 (S234). A state (ii) shown in FIG. 7 indicates a state in which the process of step S234 has been processed, i.e., a state in which the selected middle-resolution data D2 is stored in the transmission apparatus 100 and the relay apparatus 200.

After the sequence of transmission of middle-resolution data is started, the reception apparatus 300 plays back a content at middle resolution quality using the received middle-resolution data D2. In this case, the control unit 310 changes the playback position PI, depending on the frame rate, as in the first embodiment.

### (Sequence of generation of middle-resolution video)

Next, a sequence of generation of a middle-resolution video will be described. The sequence of generation of a middle-resolution video is started after step S234 by the user operating the reception apparatus 300 and thereby selecting a trimming range.

Initially, the control unit 310 generates trimming range information that is second position information according to the user's selection operation with respect to any playback position range (S240). The trimming range information contains, for example, position information indicating a playback position where trimming is started, and position information indicating a playback position where trimming is ended. The user's selection operation is detected in a manner similar to that of the first embodiment. A state (v) of FIG. 7 indicates a state in which a playback position range P2 has been selected according to the user's selection operation.

Next, the communication unit 330 transmits the trimming range information to the relay apparatus 200 under the control of the control unit 310 (S242).

Moreover, the control unit 210 generates a video of middle resolution quality within the range corresponding to the trimming range information, using the middle-resolution data D2 stored in the storage unit 220 (S244). A state (vii) of FIG. 7 indicates a state in which, after step S244, a video of middle resolution quality within a range corresponding to the playback position range P2 indicated by the trimming range information has been generated.

### (Sequence of transmission to network different from LAN)

Next, a sequence of transmission of a generated video to the network 400 different from the LAN will be described. The sequence of transmission of a generated video to the network 400 different from the LAN may, for example, be started after step S244 by the user operating and thereby selecting the transmission operation. Alternatively, the sequence of transmission of a generated video to the network 400 different from the LAN may, for example, be started after step S244 automatically under the control of the control unit 210. In this embodiment, a generated video is transmitted to a data storage apparatus of a server, an information processing apparatus, or the like that is connected to the network 400 different from the LAN, for example.

### (Relay operation of relay apparatus 200)

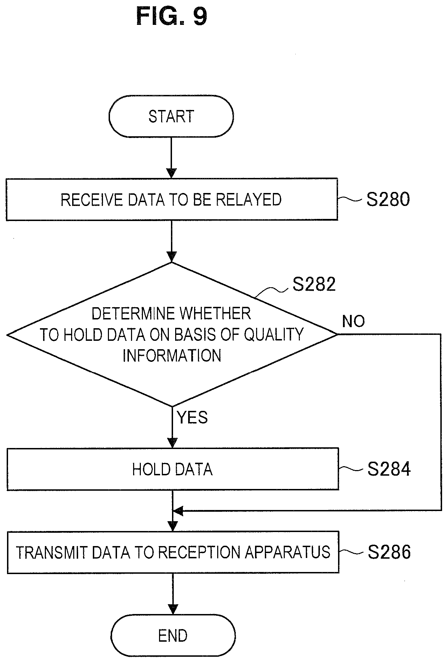

Note that, in this embodiment, the control unit 210 of the relay apparatus 200, when relaying encoded data of the low-resolution data D1, the middle-resolution data D2, or the like that is transmitted from the transmission apparatus, determines whether the encoded data is to be held and stored in the storage unit 220. FIG. 9 is a flowchart showing a data relaying operation of the relay apparatus 200 according to this embodiment.

Initially, the communication unit 230 of the relay apparatus 200 receives data that is to be relayed (S280). The data to be relayed is, for example, encoded data of the low-resolution data D1, the middle-resolution data D2, the high-resolution data D3, or the like that is transmitted from the transmission apparatus 100.

Next, the control unit 210 determines whether to hold the received data, on the basis of quality information (S282). The quality information indicates the quality of a content used in processing performed by the relay apparatus 200. For example, the quality information indicates the quality of a content used in step S244 or step S250. When the received data is data used in processing of the quality of a content indicated by the quality information, the control unit 210 holds the received data. The quality information is previously set before the low-frequency component data sequence is performed, and is set automatically, or arbitrarily by the user, for example.

If the result of determination in step S282 indicates that the data is to be held, the control unit 210 causes the storage unit 220 to hold the received data (S284). After step S284, the communication unit 230 transmits the received data to the reception apparatus 300 under the control of the control unit 210 (S286).

Alternatively, if the result of determination in step S282 indicates that the data is not to be held, the process of step S286 is performed. After step S286, the control unit 210 ends the relay operation.

For example, in the example of FIG. 8A and FIG. 8B, the relay apparatus 200 generates a video of middle resolution quality, and transmits a rendered video to the network 400 different from the LAN. Therefore, the control unit 210 causes the storage unit 220 to hold only the middle-resolution data D2. For example, during steps S212-S214, data received from the transmission apparatus 100 is the low-resolution data D1, and therefore, the control unit 210 only relays the data without holding the data. Also, for example, in step S230, data received from the transmission apparatus 100 is the middle-resolution data D2, and therefore, the control unit 210 holds the data.

In the foregoing, an example of the operation of generating a video of middle resolution quality and transmitting the generated video to the network 400 different from the LAN, in the data transfer system according to this embodiment, has been described. In this example of the operation, the low-resolution data D1 is previously transmitted from the transmission apparatus 100, and stored in the reception apparatus 300. As a result, the user can check a video of low resolution quality and thereby roughly grasp the video. In this case, the low-resolution data D1 is previously stored in the reception apparatus 300 and is displayed without an influence of the communication environment, resulting in an improvement in quick response performance.

In addition, in the data transfer system according to this example of the operation, the middle-frequency component data D2 corresponding to the playback position information is transmitted from the transmission apparatus 100 to the reception apparatus 300. In this case, only a portion of the middle-frequency component data D2 corresponding to any position selected by the user is transmitted, and therefore, compared to a case where all the middle-frequency component data D2 is transmitted, the total amount of transferred data can be reduced. As a result, the power consumption of the entire system can be reduced.

Moreover, in the data transfer system according to this example of the operation, the user seeks a desired playback position or range while streaming playback of a video is being performed at middle resolution quality. In this case, in the data transfer system according to this example of the operation, compared to a case where seeking is performed while streaming playback of a video is being performed at high resolution quality, the total amount of transferred data can be reduced, resulting in an improvement in quick response performance.

Moreover, in the data transfer system according to this example of the operation, rendering is performed using the middle resolution data D2 that is stored in the relay apparatus 200, and a rendered video is transmitted to the network 400 different from the LAN. Therefore, compared to a case where the middle resolution data D2 is not stored in the relay apparatus 200, the amount of transferred data between the transmission apparatus 100 or the reception apparatus 300 and the relay apparatus 200 can be reduced when a rendered video is transmitted to the network 400 different from the LAN. As a result, in the data transfer system according to this example of the operation, the power consumption of the entire system can be reduced.

### [2-3. Example of operation of editing and transmitting high-resolution data to network different from LAN]

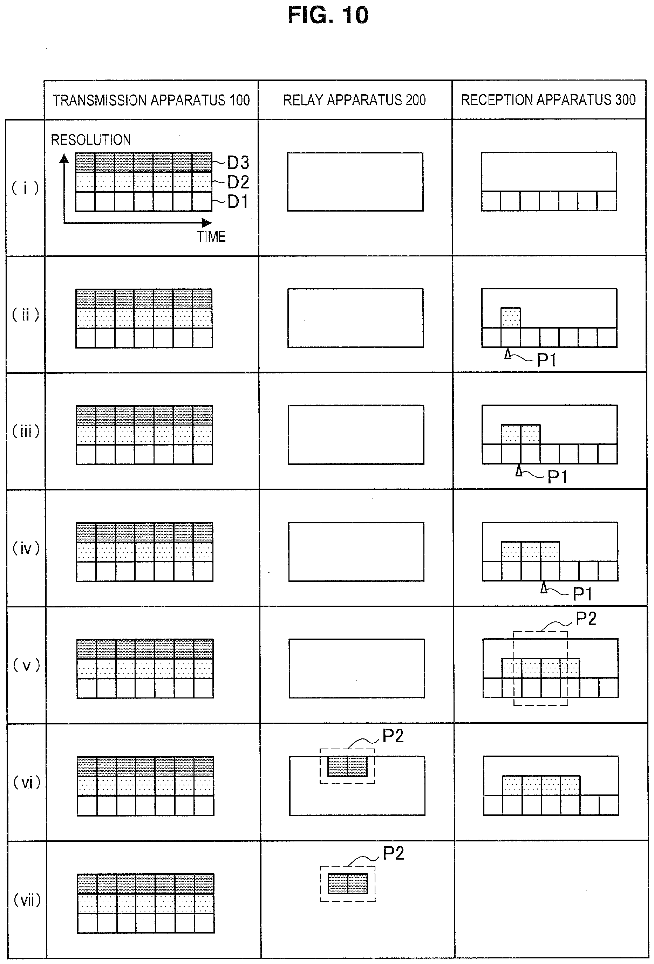

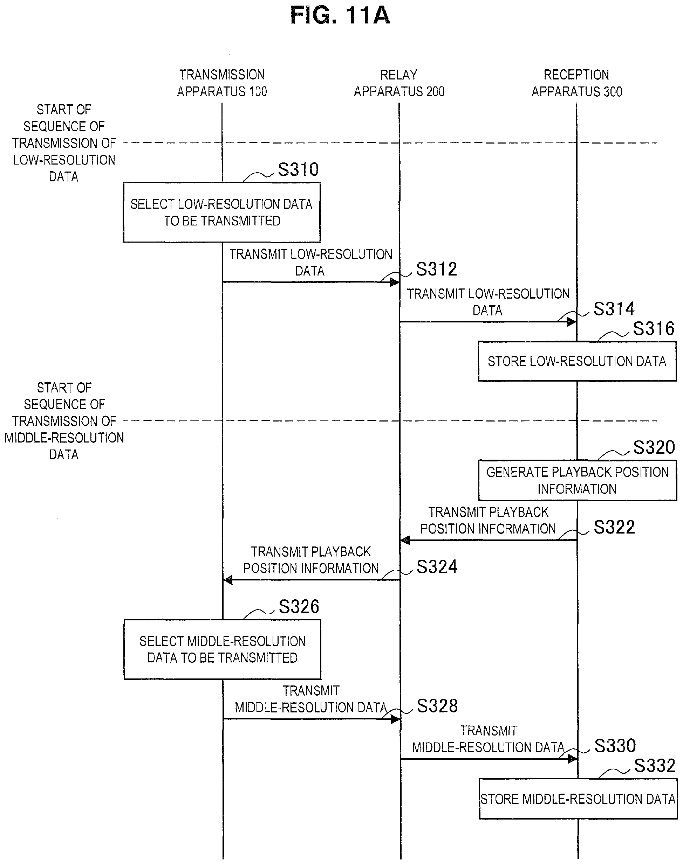

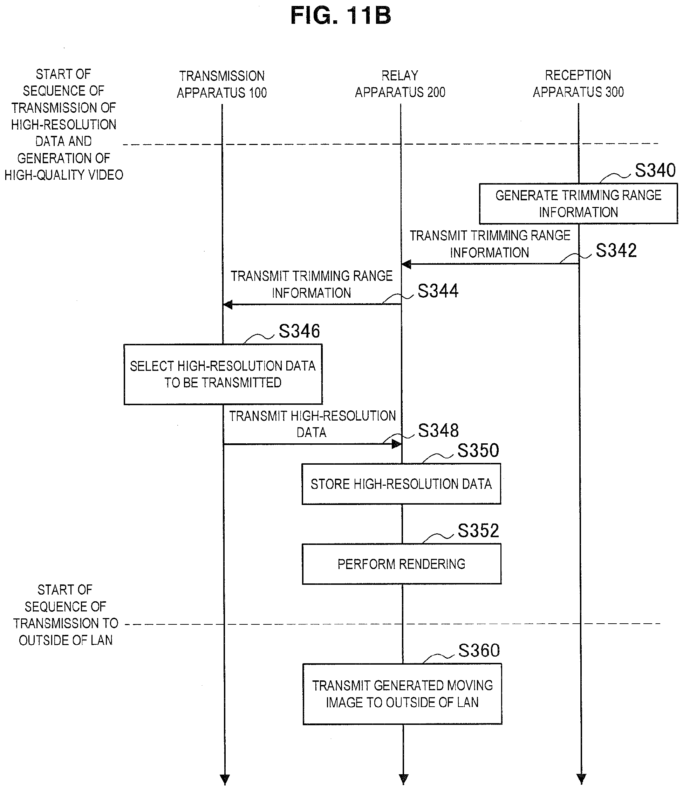

Next, an example of an operation of generating a video of high resolution quality, and transmitting the generated video to the network 400 different from the LAN, will be described with reference to FIG. 10, FIG. 11A, and FIG. 11B. FIG. 10 is an illustrative diagram showing an operation of editing a video, and transmitting high-resolution data to the network 400 different from the LAN, in the data transfer system according to this embodiment. FIG. 11 is a sequence diagram showing a sequence of transmission of the low-resolution data D1 and the middle-resolution data D2, in this embodiment. FIG. 11B is a sequence diagram showing a sequence of transmission of the high-resolution data D3, and a sequence of generation and transmission of a high-resolution video to a network different from a LAN, in this embodiment.

### (Sequence of transmission of low-resolution data)

Firstly, a sequence of transmission of the low-resolution data D1 will be described. The processes of steps S310-S316 in the sequence of transmission of low-resolution data are similar to the processes of steps S210-S216 described with reference to FIG. 8A.

### (Sequence of transmission of middle-resolution data)

Next, a sequence of transmission of the middle-resolution data D2 will be described. The sequence of transmission of the middle-resolution data D2 is, for example, started after step S316 by the user operating the reception apparatus 300 and thereby selecting a playback position on the basis of the low resolution D1. When the sequence of transmission of the middle-resolution data D2 is started, the control unit 310 of the reception apparatus 300 generates playback position information that is first position information indicating the selected playback position (S320). The playback position information contains data indicating the selected playback position.

Moreover, the communication unit 330 transmits the generated playback position information to the relay apparatus 200 under the control of the control unit 310 (S322). After step S322, the communication unit 230 of the relay apparatus 200 transmits the received playback position information to the transmission apparatus 100 under the control of the control unit 210 (S224).

Thereafter, the control unit 110 of the transmission apparatus 100 selects at least a portion of the middle-resolution data D2 corresponding to the received playback position information (S326). After step S326, the communication unit 130 transmits the selected middle-resolution data D2 to the relay apparatus 200 under the control of the control unit 110 (S328).

Next, the communication unit 230 of the relay apparatus 200 transmits the received middle-resolution data D2 to the reception apparatus 300 under the control of the control unit 210 (S330).

Moreover, the control unit 310 of the reception apparatus 300 causes the storage unit 320 to store the received middle-resolution data D2 (S332). A state (ii) shown in FIG. 10 indicates a state in which the process of step S332 has been performed, i.e., a state in which the selected middle-resolution data D2 is stored in the transmission apparatus 100 and the reception apparatus 300.

After the start of the sequence of transmission of middle-resolution data, the reception apparatus 300 plays back a content at middle resolution quality using the received middle-resolution data D2. In this case, the control unit 310 changes the playback position PI, depending on the frame rate, as in the first embodiment.

### (Sequence of transmission of high-resolution data and generation of high-resolution video)

Next, a sequence of transmission of high-resolution data and generation of a high-resolution video will be described. The sequence of transmission of high-resolution data and generation of a high-resolution video is started after step S332 by the user operating the reception apparatus 300 and thereby selecting a trimming range.

Initially, the control unit 310 generates trimming range information according to the user's selection operation with respect to any playback position range (S340). The trimming range information contains, for example, position information indicating a playback position where trimming is started, and position information indicating a playback position where trimming is ended. The user's selection operation is detected in a manner similar to that of the first embodiment. A state (v) of FIG. 10 indicates a state in which a playback position range P2 has been selected according to the user's selection operation.

Next, the communication unit 330 transmits the trimming range information to the relay apparatus 200 under the control of the control unit 310 (S342). After S342, the communication unit 230 of the relay apparatus 200 transmits the received trimming range information to the transmission apparatus 100 under the control of the control unit 210 (S344).

Moreover, the control unit 110 of the transmission apparatus 100 selects at least a portion of the high-resolution data D3 corresponding to the received trimming range information (S346). In this case, the control unit 110 selects, for example, a portion of the high-resolution data D3 corresponding to the playback position range indicated by the trimming range information.

Thereafter, the communication unit 130 transmits the selected high-resolution data D3 to the relay apparatus 200 under the control of the control unit 110 (S348).

Next, the control unit 210 of the relay apparatus 200 causes the storage unit 220 to store the received high-resolution data D3 (S350). A state (vi) of FIG. 10 indicates a state in which, after step S350, the high-resolution data D3 corresponding to the playback position range P2 indicated by the trimming range information is stored in the storage unit 220.

Moreover, the control unit 210 generates a video of high resolution quality within the range corresponding to the trimming range information using the high-resolution data D3 stored in the storage unit 220 (S352). A state (vii) of FIG. 10 indicates a state in which, after step S352, a video of high resolution quality within a range corresponding to the playback position range P2 indicated by the trimming range information.

### (Sequence of transmission to outside of LAN)

Next, a sequence of transmission of a generated video to the outside of a LAN will be described. The process of step S350 in the sequence of transmission of a generated video to the outside of a LAN, is the same as the process of step S250 described with reference to FIG. 8B.

### (Relay operation of relay apparatus 200)

Note that, even in a case where a video of high resolution quality is edited and transmitted to the outside of a LAN, the data relay operation of the relay apparatus 200 is performed in a manner similar to that in the example shown in FIG. 9.

Therefore, the control unit 210 does not cause the storage unit 220 to hold the low-resolution data D1 and the middle-resolution data D2, which are not used in a video of high resolution quality. For example, during steps S312-S314, data received from the transmission apparatus 100 is the low-resolution data D1, and therefore, is only relayed without being held. Also, for example, during steps S328-S330, data received from the transmission apparatus 100 is the middle-resolution data D2, and therefore, is only relayed without being held.

In the foregoing, an example of an operation of generating a video of high resolution quality, and transmitting the generated video to the network 400 different from the LAN, in the data transfer system according to this embodiment, has been described. In this example of the operation, the low-resolution data D1 is previously transmitted from the transmission apparatus 100, and stored in the reception apparatus 300. As a result, the user can check a video of low resolution quality and thereby roughly grasp the video. In this case, the low-frequency component data D1 is previously stored in the reception apparatus 300 and is displayed without an influence of the communication environment, resulting in an improvement in quick response performance.

Also, in the data transfer system according to this example of the operation, the middle-frequency component data D2 corresponding to the playback position information is transmitted from the transmission apparatus 100 to the reception apparatus 300. In this case, only a portion of the middle-frequency component data D2 corresponding to any position selected by the user is transmitted, and therefore, compared to a case where all the middle-frequency component data D2 is transmitted, the total amount of transferred data can be reduced. As a result, the power consumption of the entire system can be reduced.

Moreover, in the data transfer system according to this example of the operation, the user seeks a desired playback position or range while streaming playback of a video is being performed at middle resolution quality. In this case, in the data transfer system according to this example of the operation, compared to a case where seeking is performed while streaming playback of a video is being performed at high resolution quality, the total amount of transferred data can be reduced, resulting in an improvement in quick response performance.

Moreover, in the data transfer system according to this example of the operation, the high-frequency component data D3 corresponding to the trimming range information is transmitted from the transmission apparatus 100 to the relay apparatus 200, in which a video of high resolution quality corresponding to the trimming range information is rendered. In this case, the high-frequency component data D3 is not transmitted to the reception apparatus 300, and only a portion of the high-frequency component data D3 that is necessary for rendering is transmitted to the relay apparatus 200, and therefore, the total amount of transferred data is reduced. As a result, in the data transfer system according to this example of the operation, the power consumption of the entire system can be reduced.

Moreover, in the data transfer system according to this example of the operation, rendering is performed using the high resolution data D3 that is stored in the relay apparatus 200, and a rendered video is transmitted to the network 400 different from the LAN. Therefore, compared to a case where the high resolution data D3 is not stored in the relay apparatus 200, the amount of transferred data between the transmission apparatus 100 or the reception apparatus 300 and the relay apparatus 200 can be reduced when a rendered video is transmitted to the network 400 different from the LAN. As a result, in the data transfer system according to this example of the operation, the power consumption of the entire system can be reduced.

### <3. Third embodiment (another data transfer system)>

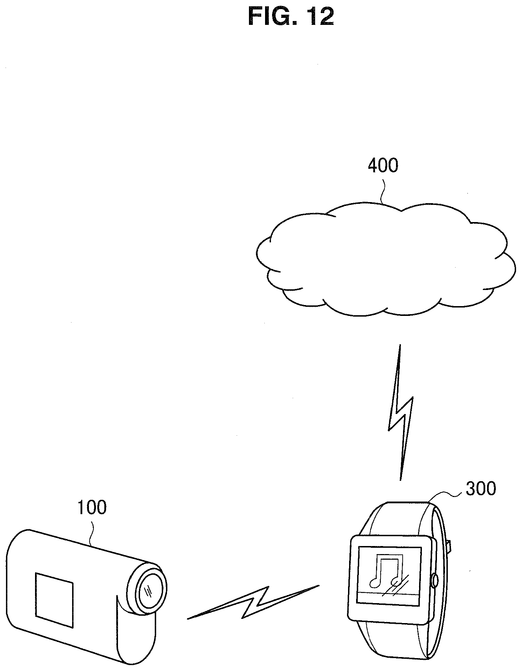

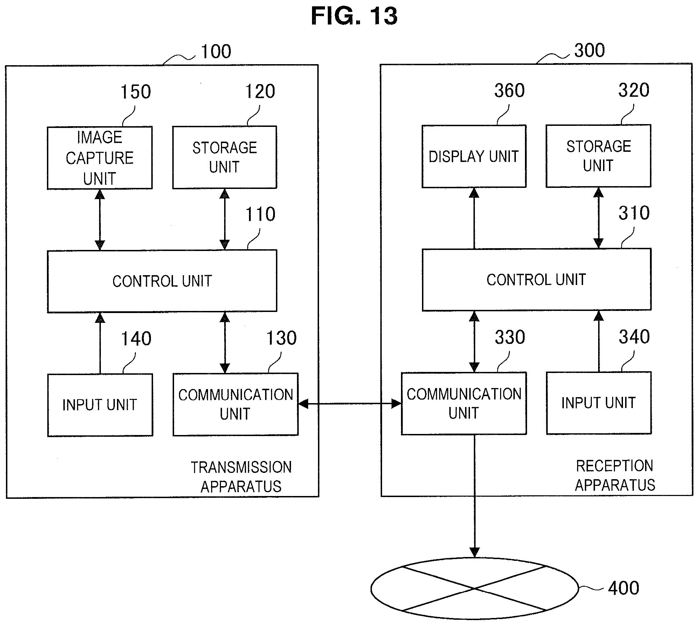

Next, a third embodiment of the data transfer system according to the present disclosure will be described with reference to FIG. 12 and FIG. 13. FIG. 12 is an illustrative diagram showing a data transfer system according to the third embodiment of the present disclosure.

As shown in FIG. 12, the data transfer system according to this embodiment includes a transmission apparatus 100 and a reception apparatus 300, and therefore, has an apparatus configuration different from those of the first embodiment and the second embodiment, and has processing techniques for editing, transmission, and the like of encoded data that are similar to those of the first embodiment and the second embodiment. The transmission apparatus 100 and the reception apparatus 300 are, for example, connected to a LAN using wireless communication to transmit and receive data to and from each other. The reception apparatus 300 can be connected to a network 400 different from the LAN to which the transmission apparatus 100 is connected, to transmit and receive data to and from another data storage apparatus connected to the different network.

FIG. 13 is a functional block diagram showing configurations of a transmission apparatus, a relay apparatus, and a reception apparatus according to this embodiment. Note that the apparatus configuration of the transmission apparatus 100 according to this embodiment is assumed to be similar to those of the first embodiment and the second embodiment.

The reception apparatus 300 according to this embodiment has an apparatus configuration in which the relay apparatus 200 and the reception apparatus 300 according to the first embodiment are combined. For example, a communication unit 330 of the reception apparatus 300 according to this embodiment performs the operation of the communication unit 230 according to the first embodiment in addition to the operation of the communication unit 330 according to the first embodiment. For example, the communication unit 330 according to this embodiment serves as an access point to form a Wi-Fi wireless LAN to which the transmission apparatus 100 is connected. Also, the communication unit 330 can be connected to a network 400 outside the LAN to which the transmission apparatus 100 is connected, to perform data communication with a data storage apparatus outside the LAN. Moreover, the communication unit 330 can functions as a gateway to perform data communication with the Internet outside the LAN.

In the foregoing, the data transfer system according to this embodiment has been described. In the data transfer system according to this embodiment, the reception apparatus 300 performs operations similar to those of the relay apparatus 200 and the reception apparatus 300 in the first embodiment and the second embodiment. As a result, the data transfer systems of the first embodiment and the second embodiment can be implemented by the apparatus configuration shown in FIG. 13.

### <4. Hardware configuration>

### (Transmission apparatus 100)

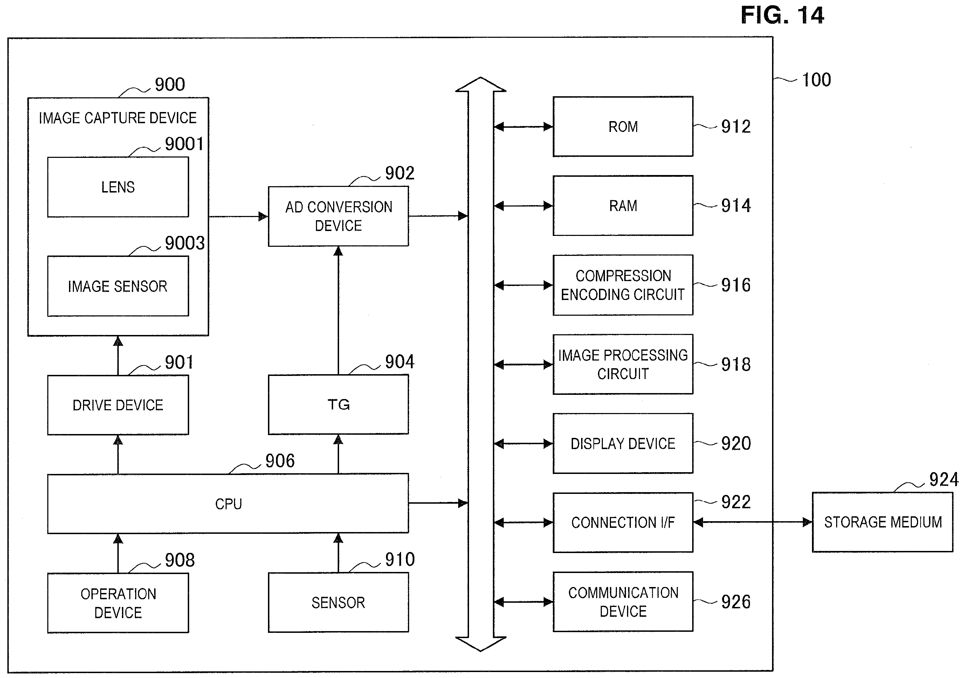

A hardware configuration of the transmission apparatus 100 according to an embodiment of the present disclosure will be described with reference to FIG. 14. FIG. 14 is a block diagram for describing the hardware configuration of the transmission apparatus 100. The transmission apparatus 100 shown can, for example, serve as the transmission apparatuses 100 of the above embodiments.

The transmission apparatus 100 has an image capture device 900, a drive device 901, an analog-to-digital (AD) conversion device 902, a timing generator (TG) 904, and a central processing unit (CPU) 906. The transmission apparatus 100 also has an operation device 908, a sensor 910, a read only memory (ROM) 912, a random access memory (RAM) 914, a compression encoding circuit 916, an image processing circuit 918, and a display apparatus 920. The transmission apparatus 100 also has a connection I/F 922, a storage medium 924, and a communication device 926.

The image capture device 900, which has a lens 9001 and an image sensor 9003, functions as an image capture unit 150. The lens 9001 includes a plurality of lenses, such as a zoom lens, a focusing lens, and the like. The image sensor 9003 is, for example, implemented by a charge coupled device (CCD) or a complementary metal oxide semiconductor (CMOS). The image sensor 9003 receives subject light (incident light) captured by the lens 9001, and converts the subject light into signal charge. The image sensor 9003 outputs a voltage depending on the signal charge obtained by the conversion, as a pixel signal of each pixel. Note that a combination of the pixel signals of all pixels is an image signal.

The AD conversion device 902 converts an input analog signal into a digital signal. Specifically, the AD conversion device 902 converts an image signal output from the image sensor 9003, which is an analog signal, into a digital signal, and writes the digital signal into the RAM 914.

Here, in the first embodiment to the third embodiment, the AD conversion device 902 functions as a function of the control unit 110. Specifically, in the first embodiment to the third embodiment, the AD conversion device 902 digitizes an image formed by an analog signal output from the image capture unit 150, and writes the digitized image into the RAM 914.

The RAM 914 is a storage area for temporarily storing data. The RAM 914 stores a digitized image signal obtained by the AD conversion device 902 or image data generated by the image processing circuit 918 described below. The RAM 914 also temporarily stores a program used in execution of the CPU 906 described below, a parameter changed as appropriate in the execution, and the like.

The drive device 901 moves each lens of the lens 9001 in the optical axis direction to focus on a subject.

The TG 904 outputs a pulse signal to the image sensor 9003 and the AD conversion device 902 so that operation timings of the image sensor 9003 and the AD conversion device 902 are synchronized with each other.

The image processing circuit 918 performs image processes, such as a white balance process, color interpolation process, contour compensation process, grayscale conversion process, and the like. Specifically, the image processing circuit 918 performs these image processes on an image signal written in the RAM 914 to generate image data. Thereafter, the image processing circuit 918 temporarily stores the generated image data in the RAM 914. The image processing circuit 918 functions as a function of the control unit 110 in the first embodiment to the third embodiment.

The compression encoding circuit 916 performs a compression encoding process on image data which is temporarily stored in the RAM 914 and on which image processing has been performed by the image processing circuit 918. For example, when image data is based on a moving image, the compression encoding circuit 916 generates encoded data in the moving picture experts group (MPEG) format or the H.26l format using the compression encoding process. The compression encoding circuit 916 writes the encoded data, and its accompanying information including shooting conditions, a shooting date, basic camera information, and the like, to the storage medium 924 connected to the connection I/F 922. The compression encoding circuit 916 functions as a function of the control unit 110 in the first embodiment-third embodiment.

The connection I/F 922 electrically connects the transmission apparatus 100 and the storage medium 924 together. As a result, the transmission apparatus 100 can write data to the storage medium 924, and can read data stored in the storage medium 924.

The storage medium 924 functions as a storage unit 120 for storing image data. The storage medium 924 is, for example, implemented by a recording medium, such as a flash memory (e.g., a card-type memory or the like), a digital versatile disc (DVD), or the like.

The display apparatus 920 displays settings for image capture and a communication state. The display apparatus 920 is, for example, implemented by a liquid crystal display (LCD), an organic light-emitting diode (OLED), or the like.

The communication device 926 is, for example, a communication interface including a communication device for connecting to a communication network, and the like. The communication device 926 is, for example, implemented by a communication card or the like for wired or wireless local area network (LAN), Bluetooth (registered trademark), or wireless USB (WUSB).

The ROM stores a program, a calculation parameter, and the like that are used by the CPU 906.

The CPU 906 functions as a calculation process device and a control device, and controls all operations in the transmission apparatus 100 according to various programs. Note that the CPU 906 may include a ROM that stores a program, a calculation parameter, and the like used, and a RAM that temporarily stores a parameter that is changed as appropriate. The CPU 906 according to an embodiment of the present disclosure reads out and executes a control program stored in the RAM 914 to control all operations in the transmission apparatus 100. The CPU 906 functions as a function of the control unit 110 in the first embodiment to the third embodiment, and performs an image capture control, a recording control, and a communication control.

The operation device 908 receives, from the user, an image capture command, initial settings, settings during image capture and playback, the aspect ratio setting of an output image, and the like. The operation device 908 is, for example, implemented as a button, a touch sensor, or a touch screen integrally formed with the display apparatus 920. The operation device 908 functions as the input unit 140 in the first embodiment to the third embodiment.

The sensor 910 is, for example, various sensors, such as an acceleration sensor, gyroscopic sensor, geomagnetic sensor, optical sensor, acoustic sensor, barometric pressure sensor, and the like. The sensor 910 acquires, for example, information relating to a state of the transmission apparatus 100 itself, such as the orientation of the housing of the transmission apparatus 100 or the like, and information relating to a surrounding environment of the transmission apparatus 100, such as brightness, noise, or the like around the transmission apparatus 100. The sensor 910 may also include a GPS sensor that receives a global positioning system (GPS) signal, and measures the latitude, longitude, altitude of the apparatus.

### (Relay apparatus 200)

Next, a hardware configuration of the relay apparatus 200 according to an embodiment of the present disclosure will be described. The relay apparatus 200 according to this embodiment can, for example, serve as the relay apparatus 200 in the above embodiments.

The relay apparatus 200 has the CPU 906, the ROM 912, the RAM 914, the image processing circuit 918, the connection I/F 922, the storage medium 924, and the communication device 926 of the hardware configuration of the transmission apparatus 100 shown in FIG. 14. Note that constitutional elements having functional components similar to those of the transmission apparatus 100 will not be redundantly described.

The image processing circuit 918 generates, from image data stored in the storage medium 924, image data of predetermined playback quality within a playback range indicated by the trimming range information, and writes the image data to the storage medium 924 connected to the connection I/F 922.

### (Reception apparatus 300)

Next, a hardware configuration of the reception apparatus 300 according to an embodiment of the present disclosure will be described. The reception apparatus 300 according to this embodiment can, for example, serve as the reception apparatus 300 of the above embodiments.

The reception apparatus 300 has the CPU 906, the operation device 908, the ROM 912, the RAM 914, the display apparatus 920, the connection I/F 922, the storage medium 924, and the communication device 926 of the hardware configuration of the transmission apparatus 100 shown in FIG. 14. Note that constitutional elements having functional components similar to those of the transmission apparatus 100 will not be redundantly described.

The display apparatus 920 functions as the display unit 360 that displays image data. The display apparatus 920 may, for example, be implemented by an LCD, OLED, or the like. The display apparatus 920 displays an image for setting during setting in addition to a captured video.

The operation device 908 receives, from the user, a playback command, a playback position select command, settings for playback, and the like. The operation device 908 may, for example, be implemented as a button, a touch sensor, or a touch screen integrally formed with the display apparatus 920. The operation device 908 functions as the input unit 140 in the first embodiment to the third embodiment.

In the foregoing, an example of the hardware configurations of the transmission apparatus 100, the relay apparatus 200, and the reception apparatus 300 has been described. Each of the above constitutional elements may be constructed using a general-purpose member, or hardware specialized for the function of that constitutional element. The above configuration may be changed as appropriate, depending on the technical level at the time when the configuration will be used.

### <5. Conclusion>

In the foregoing, preferred embodiments of the present disclosure have been described in detail with reference to the accompanying drawings. For the transmission apparatus 100, the relay apparatus 200, and the reception apparatus 300 according to the present disclosure, first encoded data used for first quality that is stored in the transmission apparatus 100 is transmitted to the reception apparatus 300. Thereafter, a portion of second encoded data used for second quality higher than the first quality, that corresponds to the playback position information, is transmitted from the transmission apparatus 100 to the reception apparatus 300. As a result, the user can improve quick response performance for the operation of roughly grasping a video using the video of the first quality. Also, only a portion of the second encoded data corresponding to the playback position information selected by the user is transmitted from the transmission apparatus 100 to the reception apparatus 300, and therefore, the amount of transferred data is reduced, so that the quick response performance of the operation can be improved.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above embodiments, the transmission apparatus 100, the relay apparatus 200, and the reception apparatus are connected together by a Wi-Fi wireless LAN as a network employing wireless communication. The present technology is not limited to such an example. For example, the apparatuses may be connected together by a network employing Bluetooth (registered trademark). In this case, for example, in the first embodiment and the second embodiment, the relay apparatus 200 is a central apparatus. Alternatively, for example, in the third embodiment, the reception apparatus 300 is a central apparatus.

Also, in the above embodiments, the transmission apparatus 100, the relay apparatus 200, and the reception apparatus are connected together by a network employing wireless communication. The present technology is not limited to such an example. For example, at least any apparatuses may be connected together by wire.

Also, in the above embodiments, the relay apparatus 200 or the reception apparatus 300 is connected to a data storage apparatus connected to a network different from an LAN, by wireless communication. The present technology is not limited to such an example. For example, the relay apparatus 200 or the reception apparatus 300 may be connected to a data storage apparatus by wire.

For example, in the first embodiment, a video of high resolution quality is rendered, and the rendered video is transmitted to a network different from an LAN. The present technology is not limited to such an example. For example, a video of middle resolution quality may be rendered, and the rendered video may be transmitted to a network different from an LAN. In this case, the processes of steps S144-S150 shown in FIG. 5A are not performed. Moreover, in step S152, the control unit 210 may render a video of middle resolution quality corresponding to the trimming range information using the low-frequency component data D1 and the middle-frequency component data D2 stored in the storage unit 220.

Also, in the above embodiments, the transmission apparatus 100 previously transmits encoded data that is to be used in playback at low resolution quality, to the reception apparatus 300, on the basis of the format of encoded data. The present disclosure is not limited to such an example. For example, the control unit 110 of the transmission apparatus 100 may determine whether to transmit encoded data that is to be used in playback at low resolution quality, on the basis of header information or the like stored in the encoded data. In this case, the header information may be added to encoded data by the user's operation.

Also, in the second embodiment, the relay apparatus 200 determines whether to hold encoded data to be relayed, on the basis of the quality information. The present disclosure is not limited to such an example. For example, the control unit 210 of the relay apparatus 200 may hold all encoded data to be relayed, as in the first embodiment. As a result, for example, if transfer from the relay apparatus 200 to the reception apparatus 300 has failed, then when an attempt is made to transfer encoded data to the reception apparatus 300 again, the encoded data is not transferred from the transmission apparatus 100 to the reception apparatus 300. Therefore, the total amount of transferred data can be reduced, and therefore, the power consumption of the entire system can be reduced.

Also, in the second embodiment, encoded data is compressed in the spatial direction. The present disclosure is not limited to such an example. For example, encoded data may be compressed in the temporal direction or both in the spatial direction and the temporal direction. For example, when encoded data is compressed in the temporal direction, the frame rate may be decreased, e.g., one frame per second for the low-resolution data D1, 15 frames per second for the middle-resolution data D2, and 30 frames per second for the high-resolution data D3.

Also, in the above embodiments, the transmission apparatus 100, the relay apparatus 200, and the reception apparatus 300 transmit and receive encoded data. The present disclosure is not limited to such an example. For example, encoded data as well as temporally continuous related data that is related to the encoded data may be transmitted and received together. For example, when a content is a captured video, the related data is information that is obtained during image capture. For example, the related data is a distance to an image of a subject during shooting that is obtained from the focal length, or the like.

Also, in the above embodiments, the transmission apparatus 100 is, for example, an image capture device for capturing a video, such as a digital video camera or the like. The present disclosure is not limited to such an example. For example, the transmission apparatus 100 may be a storage apparatus that stores a content, such as a video, audio, and the like.

In addition, the effects described in the present specification are merely illustrative and demonstrative, and not limitative. In other words, the technology according to the present disclosure can exhibit other effects that are evident to those skilled in the art along with or instead of the effects based on the present specification.

### Reference Signs List

- 100: transmission apparatus
- 110: control unit
- 120: storage unit
- 130: communication unit
- 140: input unit
- 150: image capture unit
- 200: relay apparatus
- 210: control unit
- 220: storage unit
- 230: communication unit
- 300: reception apparatus
- 310: control unit
- 320: storage unit
- 330: communication unit
- 340: input unit
- 360: display unit
- 361: content display region
- 362: seek bar
- 363: playback position
- 364: playback time
- 365: total playback time
- 400: network different from LAN

## Claims

1. A relay apparatus (200) comprising:
a communication unit (230) configured to relay first encoded data used for playback at first quality and second encoded data used for playback at second quality higher than the first quality, for same temporally continuous content transmitted from a transmission apparatus to a reception apparatus (300), and relay first position information relating to a data position transmitted from the reception apparatus to the transmission apparatus (100);
a storage unit (220); and
a control unit (210) configured to determine whether to cause the storage unit to hold the first encoded data, on the basis of a format of the first encoded data relayed from the communication unit,
wherein the communication unit relays the first encoded data, and thereafter, relays the first position information, and relays a portion of the second encoded data corresponding to the first position information.

2. The relay apparatus according to claim 1,
wherein the first encoded data is used for playback at the first quality, and
wherein both the first encoded data and the second encoded data are used for playback at the second quality.

3. The relay apparatus according to claim 1,
wherein the control unit causes the storage unit to hold first encoded data having a format used for both playback at the first quality and playback at the second quality, and causes the storage unit not to hold first encoded data having a format not used for playback at the second quality.

4. The relay apparatus according to claim 1,
wherein the first encoded data, the second encoded data, and the other encoded data have different compression ratios, and
wherein the relay apparatus further comprises a control unit configured to determine whether to cause the storage unit to store at least one of the first encoded data, the second encoded data, or the other encoded data, on the basis of quality information indicating quality of a content used in processing in the relay apparatus.

5. The relay apparatus according to claim 1,
wherein the communication unit receives third encoded data which is a piece of encoded data transmitted from the transmission apparatus, the third encoded data being used for playback at third quality higher than the second quality, and
wherein the storage unit stores the third encoded data.

6. The relay apparatus according to claim 1,
wherein the communication unit receives second position information relating to a data position transmitted from the reception apparatus, or relays the second position information to the transmission apparatus.

## Patentansprüche

1. Weiterleitungsvorrichtung (200), umfassend:
eine Kommunikationseinheit (230), die ausgelegt ist zum Weiterleiten erster codierter Daten, die zur Wiedergabe mit einer ersten Qualität verwendet werden, und zweiter codierter Daten, die zur Wiedergabe mit einer zweiten Qualität höher als die erste Qualität verwendet werden, für denselben zeitlich kontinuierlichen Inhalt, der von einer Übertragungsvorrichtung zu einer Empfangsvorrichtung (300) übertragen wird, und Weiterleiten erster Positionsinformationen bezüglich einer Datenposition, die von der Empfangsvorrichtung zu der Übertragungsvorrichtung (100) übertragen werden;
eine Speicherungseinheit (220); und
eine Steuereinheit (210), die ausgelegt ist zum Bestimmen, ob zu veranlassen ist, dass die Speicherungseinheit die ersten codierten Daten hält, auf Basis eines Formats der ersten codierten Daten, die von der Kommunikationseinheit weitergeleitet werden,
wobei die Kommunikationseinheit die ersten codierten Daten weiterleitet und danach die ersten Positionsinformationen weiterleitet und einen Teil der zweiten codierten Daten entsprechend den ersten Positionsinformationen weiterleitet.

2. Weiterleitungsvorrichtung nach Anspruch 1, wobei die ersten codierten Daten zur Wiedergabe mit der ersten Qualität verwendet werden, und wobei sowohl die ersten codierten Daten als auch die zweiten codierten Daten zur Wiedergabe mit der zweiten Qualität verwendet werden.

3. Weiterleitungsvorrichtung nach Anspruch 1, wobei die Steuereinheit veranlasst, dass die Speicherungseinheit erste codierte Daten mit einem Format hält, das sowohl zur Wiedergabe mit der ersten Qualität als auch zur Wiedergabe mit der zweiten Qualität verwendet wird, und veranlasst, dass die Speicherungseinheit keine erste codierte Daten mit einem Format hält, das nicht zur Wiedergabe mit der zweiten Qualität verwendet wird.

4. Weiterleitungsvorrichtung nach Anspruch 1, wobei die ersten codierten Daten, die zweiten codierten Daten und die anderen codierten Daten unterschiedliche Komprimierungsverhältnisse aufweisen, und
wobei die Weiterleitungsvorrichtung ferner eine Steuereinheit umfasst, die ausgelegt ist zum Bestimmen, ob zu veranlassen ist, dass die Speichereinheit die ersten codierten Daten und/oder die zweiten codierten Daten und/oder die anderen codierten Daten speichert, auf Basis von Qualitätsinformationen, die die Qualität eines bei der Verarbeitung in der Weiterleitungsvorrichtung verwendeten Inhalts angeben.

5. Weiterleitungsvorrichtung nach Anspruch 1, wobei die Kommunikationseinheit dritte codierte Daten empfängt, die ein Teil codierter Daten sind, die von der Übertragungsvorrichtung übertragen werden, wobei die dritten codierten Daten zur Wiedergabe mit einer dritten Qualität höher als die zweite Qualität verwendet werden, und wobei die Speicherungseinheit die dritten codierten Daten speichert.

6. Weiterleitungsvorrichtung nach Anspruch 1, wobei die Kommunikationseinheit zweite Positionsinformationen bezüglich einer Datenposition empfängt, die von der Empfangsvorrichtung übertragen werden, oder die zweiten Positionsinformationen zu der Übertragungsvorrichtung weiterleitet.

## Revendications

1. Appareil de relais (200) comprenant :
une unité de communication (230) configurée pour relayer des premières données codées utilisées pour une lecture à une première qualité et des deuxièmes données codées utilisées pour une lecture à une seconde qualité supérieure à la première qualité, d'un même contenu temporellement continu transmis par un appareil de transmission à un appareil de réception (300), et relayer des premières informations de position relatives à une position de données transmises par l'appareil de réception à l'appareil de transmission (100) ;
une unité de stockage (220) ; et
une unité de commande (210) configurée pour déterminer qu'il convient ou non de commander à l'unité de stockage de conserver les premières données codées, en fonction d'un format des premières données codées relayées par l'unité de communication,
dans lequel l'unité de communication relaie les premières données codées, puis relaie les premières informations de position, et relaie une partie des deuxièmes données codées correspondant aux premières informations de position.

2. Appareil de relais selon la revendication 1,
dans lequel les premières données codées sont utilisées pour une lecture à la première qualité, et
dans lequel les premières données codées et les deuxièmes données codées sont toutes utilisées pour une lecture à la seconde qualité.

3. Appareil de relais selon la revendication 1,
dans lequel l'unité de commande commande à l'unité de stockage de conserver des premières données codées ayant un format utilisé pour à la fois une lecture à la première qualité et une lecture à la seconde qualité, et commande à l'unité de stockage de ne pas conserver de premières données codées ayant un format non utilisé pour une lecture à la seconde qualité.

4. Appareil de relais selon la revendication 1,
dans lequel les premières données codées, les deuxièmes données codées, et les autres données codées ont différents rapports de compression, et
l'appareil de relais comprenant en outre une unité de commande configurée pour déterminer qu'il convient ou non de commander à l'unité de stockage de stocker au moins les premières données codées, les deuxièmes données codées ou les autres données codées, en fonction d'informations de qualité indiquant une qualité d'un contenu utilisé dans le traitement dans l'appareil de relais.

5. Appareil de relais selon la revendication 1,
dans lequel l'unité de communication reçoit des troisièmes données codées qui sont une partie de données codées transmises par l'appareil de transmission, les troisièmes données codées étant utilisées pour une lecture à une troisième qualité supérieure à la deuxième qualité, et
dans lequel l'unité de stockage stocke les troisièmes données codées.

6. Appareil de relais selon la revendication 1,
dans lequel l'unité de communication reçoit des secondes informations de position relatives à une position de données transmises à partir de l'appareil de réception, ou relaie les secondes informations de position à l'appareil de transmission.
